# EUROPÄISCHE PATENTSCHRIFT

(11) **EP 2 828 049 B1**
(45) Veröffentlichungstag und Bekanntmachung des Hinweises auf die Patenterteilung: **18.07.2018**
(21) Anmeldenummer: 13716194.9
(22) Anmeldetag: 15.03.2013
(51) Int. Cl.: B27C 1/08, B27C 5/02, B27M 1/08, B23Q 15/22, B23Q 17/22, G05B 19/401, G05B 19/18

(54) **VERFAHREN ZUR ERZEUGUNG VON STRUKTUREN ODER KONTUREN AN EINEM WERKSTÜCK SOWIE EINE KEHLMASCHINE**
METHOD FOR PRODUCING STRUCTURES OR CONTOURS ON A WORKPIECE, AND MOULDER
PROCÉDÉ DE RÉALISATION DE STRUCTURES OU DE CONTOURS SUR UNE PIÈCE À USINER, AINSI QUE RABOTEUSE

(30) Priorität: 20.03.2012 DE 102012006124
(43) Veröffentlichungstag der Anmeldung: 28.01.2015
(73) Patentinhaber: Michael Weinig AG, 97941 Tauberbischofsheim (DE)
(72) Erfinder: KONRAD, Andreas, 97922 Lauda-Königshofen (DE); SCHMIDT, Jürgen, 97956 Werbach (DE)
(74) Vertreter: Jackisch-Kohl, Anna-Katharina
(86) Internationale Anmeldenummer: PCT/EP2013/000801
(87) Internationale Veröffentlichungsnummer: WO 2013/139458

(56) Entgegenhaltungen:
- EP-A2- 1 127 665
- DE-A1- 19 616 165
- DE-A1- 19 751 514
- DE-A1- 19 756 503
- DE-U1- 8 714 080
- GB-A- 1 413 106
- US-A1- 2004 177 896

## Beschreibung

Die Erfindung betrifft ein Verfahren zur Erzeugung von Strukturen oder Konturen an einem Werkstück nach dem Oberbegriff des Anspruches 1 sowie eine Kehlmaschine, insbesondere zur Durchführung eines solchen Verfahrens, nach dem Oberbegriff des Anspruches 13.

Es ist bekannt, an der Oberfläche eines Werkstückes Strukturen, auch als Reliefoberfläche bezeichnet, mit Hilfe eines Werkzeuges zu erzeugen. Hierbei wird das Werkzeug in wenigstens zwei Richtungen relativ zum Werkstück verstellt. Das Dokument DE 196 16 165 A1 betrifft eine spanabhebende Bearbeitungsmaschine, wie Hobel- oder Kehlmaschine, mit mindestens einem oder mit mehreren Zerspanungswerkzeugen, wie Hobelköpfen, Fräsköpfen o. dgl. an antreibbaren, quer zu ihrer Längsrichtung verstellbaren Werkzeugwellen, wobei eine querverstellbare Werkzeugwelle mit ihrem zugehörigen Zerspanungswerkzeug mit einem gleichartig querverstellbaren, motorisch angetriebenen Schlitten in der Querverstellrichtung mechanisch verbunden ist, und der Schlitten Andruckmittel zum definierten Andrücken des Werkstücks gegen ein in Längsrichtung der Bearbeitungsmaschine verlaufendes Führungslineal aufweist. Es ist ein die jeweilige Längsposition eines Werkstücks innerhalb der Bearbeitungsmaschine erfassender Inkrementgeber vorhanden, wobei der Ausgang des Inkrementgebers mit dem Eingang einer Recheneinheit verbunden ist, wobei die Recheneinheit zum Steuern der motorischen Querverstellung des Schlittens als Funktion der Ausgangsgröße des Inkrementgebers und weiterer Eingangsgrößen der Recheneinheit, wie von Anfangs- und Endbreiten sowie der Länge eines Werkstücks, nach einem bestimmten Funktionszusammenhang ausgebildet ist.

Das Dokument DE 87 14 080 U1 offenbart eine Positioniervorrichtung für eine Abbundanlage zum Bearbeiten von Kanthölzern oder dergleichen Werkstücken, wobei entlang eines Förderers wahlweise in die Bewegungsbahn der Werkstücke schwenk- bzw. drehbare und mit diesen in Eingriff bringbare Bearbeitungseinrichtungen, wie Sägen, Bohrmaschinen, Fräsen und dergleichen vorgesehen sind und der Längsvorschub der Werkstücke entlang des Förderers über mehrere Messräder messbar ist, wobei die Messräder entlang der Rollenbahn angeordnet sind, mit ihrer Umfangsfläche schlupffrei mit einer Oberfläche des Werkstückes in Wirkverbindung stehen und in solchen Abständen zueinander angeordnet sind, dass sichergestellt ist, dass wenigstens jeweils eines der Messräder in Eingriff mit den jeweils zu positionierenden Werkstück steht. Es ist eine numerische Anzeigevorrichtung vorgesehen, die die transversale Bewegung des Werkstückes über eine Analog/Digital-Wandlereinrichtung entsprechend der Winkeldrehung des Messrades auf einem Display anzeigt.

Der Erfindung liegt die Aufgabe zugrunde, das gattungsgemäße Verfahren und die gattungsgemäße Kehlmaschine so auszubilden, dass in einfacher Weise mit hoher Genauigkeit und zuverlässig gewünschte Strukturen oder Konturen am Werkstück erzeugt werden können.

Diese Aufgabe wird beim gattungsgemäßen Verfahren erfindungsgemäß mit den kennzeichnenden Merkmalen des Anspruches 1 und bei der gattungsgemäßen Kehlmaschine erfindungsgemäß mit den kennzeichnenden Merkmalen des Anspruches 13 gelöst.

Beim erfindungsgemäßen Verfahren werden in Abhängigkeit von den Daten des Werkstückes und des Werkzeuges die Werkzeugpositionen längs des Werkstückes zur Erzeugung der Struktur oder Kontur bestimmt. Die Daten werden der Maschinensteuerung übergeben, welche das auf diesen Daten basierende CNC-Programm während des Werkstückdurchlaufes durch die Kehlmaschine abarbeitet. Das Werkzeug wird in Abhängigkeit von der Werkstückposition in Vorschubrichtung in die notwendigen Positionen verstellt, um die gewünschte Struktur oder Kontur am Werkstück zu erhalten. Mit den Werkstück-, Werkzeug- und Werkzeugpositionsdaten können beliebige Strukturen oder Konturen am Werkstück hergestellt werden. Werkstückdaten sind beispielsweise die Länge, die Breite und die Dicke des Werkstückes.

Als Daten des Werkzeuges können vorteilhaft die die Kontur bzw. das Profil des Werkzeuges bestimmenden Daten eingegeben und abgespeichert werden. Das Werkzeug kann je nach Art und/oder Form der Struktur oder Kontur des Werkstückes unterschiedlichste Konturen bzw. Profile aufweisen.

Eine zuverlässige und genaue Ausbildung der Struktur oder Kontur ergibt sich, wenn die Werkzeugpositionen des Werkzeuges in festgelegten Schritten längs des Werkstückes bestimmt und vorgegeben werden. So können die entsprechenden Werkzeugpositionen beispielsweise jeweils in Millimeterschritten angegeben und gespeichert werden. Auf diese Weise lassen sich die Strukturen oder Konturen sehr genau herstellen.

Vorteilhaft werden die Werkzeugpositionen beim Umfangsfräsen in axialer und/oder radialer Richtung des Werkzeuges bestimmt. Die axiale Position des Werkzeuges gibt an, an welcher Stelle quer zur Vorschubrichtung, d. h. bezüglich der Breite des Werkstückes, das Werkzeug das Werkstück bearbeitet. Der Radialpositionswert gibt an, wie tief das Werkzeug in das Werkstück eintaucht. Bei Werkzeugprofilen, die V-förmig oder kreissegmentförmig ausgebildet sind, ist die Struktur umso breiter, je größer die Eintauchtiefe ist. Taucht das Werkzeug nur wenig in das Werkstück ein, dann ist die Struktur entsprechend schmal. Somit kann über die axiale Werkzeugposition die Lage der Struktur auf dem Werkstück und durch die radiale Werkzeugposition die Tiefe und ggf. die Breite der Struktur festgelegt werden.

Es ist vorteilhaft möglich, auch die Winkellage des Werkzeuges in zwei Ebenen relativ zur Vorschubrichtung des Werkstückes vorzugeben und abzuspeichern. Im einfachsten Fall liegt die Drehachse des Werkzeuges senkrecht zur Vorschubrichtung und parallel zu der zu bearbeitenden Fläche des Werkstückes. Liegt die Drehachse hingegen unter einem Winkel abweichend von 90° zur Werkstück-Vorschubrichtung oder abweichend von 0° zur Fläche, lassen sich weitere Effekte der Struktur oder Kontur erzielen.

Eine präzise Steuerung und damit Erzeugung der Struktur oder Kontur ergibt sich, wenn das Werkzeug über CNC-Antriebe in Abhängigkeit von der Werkstückposition in die erforderlichen, durch das Programm festgelegten axialen und/oder radialen Positionen während des Durchlaufes des Werkstückes durch die Kehlmaschine verstellt wird.

Die Werkstückposition in der Kehlmaschine wird erfindungsgemäß durch wenigstens einen Sensor erfasst. Er kann beispielsweise Teil einer Lichtschranke sein, mit der beispielsweise der Anfang des Werkstückes erfasst werden kann.

Das Signal des Sensors wird vorteilhaft als Referenz für die Positionserfassung des Werkstückes durch wenigstens ein Messelement herangezogen. Vorteilhaft werden in der Kehlmaschine zur Positionserfassung des Werkstückes mehrere Messelemente verwendet. Ihre Messwerte werden kaskadenartig übergeben. So erfasst beispielsweise das erste Messelement die Position des Werkstückes. Spätestens wenn das Werkstück aus dem Erfassungsbereich dieses ersten Messelementes gelangt, übergibt es seine Messwerte an das nächste Messelement, das nunmehr aufbauend auf den übernommenen Messwerten die Positionswerte des Werkstückes weiter erfasst. Gelangt das Werkstück bei seinem Durchlauf durch die Maschine auch aus dem Erfassungsbereich dieses Messelementes, übergibt dieses spätestens zu diesem Zeitpunkt seinerseits seine bis dahin inkrementierten Werte dem folgenden Messelement. Auf diese Weise erfolgt die kaskadenartige Übergabe der Messwerte. Diese Messwertübergabe bzw. Geberumschaltung kann bereits dann erfolgen, wenn das Werkstück zuverlässig in den Erfassungsbereich des nachfolgenden Messelementes gelangt ist, spätestens jedoch, wenn es aus dem Erfassungsbereich des vorherigen Messelementes gelangt.

Bei einer bevorzugten Ausführungsform wird je nach Position des Werkstückes relativ zu den Bearbeitungsspindeln der Werkzeuge und den Messelementen das jeweils optimal geeignete Messelement als aktives Messelement herangezogen.

Hierbei werden die Messwerte des ausgewählten aktiven Messelementes vorteilhaft als Führungsgröße für die Achsverstellungen des jeweiligen Werkzeuges herangezogen.

Eine besonders vorteilhafte Verfahrensweise ergibt sich, wenn die Daten des Werkstückes und des Werkzeuges erfasst und zusammen mit den längs des Werkstückes bestimmten Werkzeugpositionsdaten gespeichert werden, wobei mit den gespeicherten Daten in einem Simulationsverfahren die Erzeugung der Struktur oder Kontur durchgeführt wird, und wobei nach erfolgreicher Simulation die gespeicherten Daten der Maschinensteuerung übergeben werden. Die Struktur- oder Konturerzeugung wird zunächst an einem Rechner simuliert. Dadurch lässt sich problemlos überprüfen, ob die gewünschte Struktur bzw. Kontur erhalten wird. Während des Simulationsverfahrens lassen sich erforderliche Korrekturen, insbesondere Änderungen der werkstückbezogenen Werkzeugpositionsdaten vornehmen. Erst wenn die Rechnersimulation erfolgreich war und die simulierte Struktur oder Kontur der gewünschten Struktur oder Kontur entspricht sowie die Maschinenparameter, wie maximale Verstellgeschwindigkeit oder maximale Verstellbeschleunigung eingehalten sind, werden die gespeicherten Daten der Maschinensteuerung übergeben. Aufgrund der vorangegangenen Simulation wird somit der Materialverbrauch klein gehalten, weil bereits der Durchlauf des ersten Werkstückes die gewünschte Strukturierung oder Kontur am Werkstück ergibt.

Die erfindungsgemäße Kehlmaschine zeichnet sich dadurch aus, dass mit dem Messelement vor und nach dem Werkzeug die Werkstückposition in der Kehlmaschine erfasst wird, so dass in Abhängigkeit von der jeweiligen Werkstückposition das Werkzeug in die festgelegten axialen und/oder radialen Positionen verstellt werden kann. Das Messelement liefert den Vorschubweg des Werkstückes beschreibende bzw. charakterisierende Signale an die Maschinensteuerung. Dadurch ist gewährleistet, dass das Werkzeug genau dann in die jeweiligen Positionen verstellt wird, wenn das Werkstück die exakte vorgegebene Position zum Werkzeug erreicht hat.

Bei einer einfachen und vorteilhaften Ausführungsform ist das Messelement eine Messrolle, die am Werkstück bei dessen Vorschub durch die Kehlmaschine anliegt. Aufgrund des unmittelbaren Kontaktes zwischen dem Messelement und dem Werkstück lässt sich die Werkstückposition genau bestimmen.

Bei einer bevorzugten Ausführungsform wird die Messrolle durch das Werkstück selbst bei dessen Vorschub durch die Kehlmaschine drehbar angetrieben.

Vorteilhaft ist das Messelement mit einem Drehgeber versehen, der die Drehungen der Messrolle in Signale umsetzt, die der Maschinensteuerung zugeführt werden.

Vorteilhaft liegt die Messrolle unter Druck am Werkstück an, so dass ein Schlupf zwischen der Messrolle und dem Werkstück vermieden wird.

Das Messelement ist vorteilhaft an einem quer zur Vorschubrichtung des Werkstückes verstellbaren Träger vorgesehen. Dadurch kann das Messelement so eingestellt werden, dass es zunächst etwas über das Werkstück vorsteht und wenn es von dem Werkstück erfasst wird, von diesem gegen die Gegenkraft ausgehoben bzw. zurückgestellt wird. Dadurch ist gewährleistet, dass das Messelement zuverlässig mit dem Werkstück in Kontakt ist. Weiterhin kann dadurch das Messelement bei Bedarf auf unterschiedliche Breiten oder Dicken des Werkstückes einfach abgestimmt werden.

Die Verstellung des Trägers wird vorteilhaft durch wenigstens einen Sensor erfasst.

Längs der Transportbahn der Werkstücke sind bei einer vorteilhaften Ausführungsform mehrere, in Vorschubrichtung des Werkstückes durch die Kehlmaschine mit Abstand hintereinander liegende Messelemente vorgesehen. Mit ihnen lässt sich die Position des Werkstückes bei seinem Durchlauf durch die Kehlmaschine zuverlässig erfassen.

Vorteilhaft ist es hierbei, wenn die Messelemente kaskadenartig miteinander signalverbunden sind. Dadurch können die Messelemente ihre Messwerte jeweils dem nächsten Messelement übergeben. Erfindungsgemäß wird die Werkstückposition in der Kehlmaschine durch wenigstens einen Sensor erfasst.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine erfindungsgemäße Maschine in Vorderansicht,
- Fig. 2: die Einzelheit A in Fig. 1 in vergrößerter Darstellung,
- Fig. 3: einen Ausschnitt aus Fig. 1 in vergrößerter Darstellung,
- Fig. 4: in schematischer Darstellung ein Werkzeug, mit dem eine Ranke mit Blättern in einem Werkstück hergestellt wird,
- Fig. 5: in vergrößerter Darstellung eine Ranke und ein Blatt mit eingezeichneten Hobelschritten,
- Fig. 6: ein Werkzeug zur Herstellung der Ranke in Fig. 5,
- Fig. 7: ein Werkzeug zur Herstellung des Blattes in Fig. 5,
- Fig. 8 und Fig. 9: zwei verschiedene Oberflächenmuster auf einem Werkstück,
- Fig. 10: in schematischer Darstellung zwei Werkzeuge, mit denen eine Kontur am Werkstück hergestellt wird.

Mit der im Folgenden beschriebenen Kehlmaschine und dem beschriebenen Verfahren können in der Oberfläche eines Werkstückes aus Holz, Kunststoff und dergleichen unterschiedlichste Strukturen eingebracht bzw. dieses mit unterschiedlichen Längskonturen bearbeitet werden. Diese Strukturen bzw. Konturen können unter Einhaltung möglicher Grenzen einzelner Maschinenparameter beliebige Form haben und sind frei definierbar. Die Struktur wird hierbei beim Durchlauf des Werkstückes durch die Maschine hergestellt.

Die Kehlmaschine hat eine CNC-Steuerung und CNC-gesteuerte Werkzeugachsen.

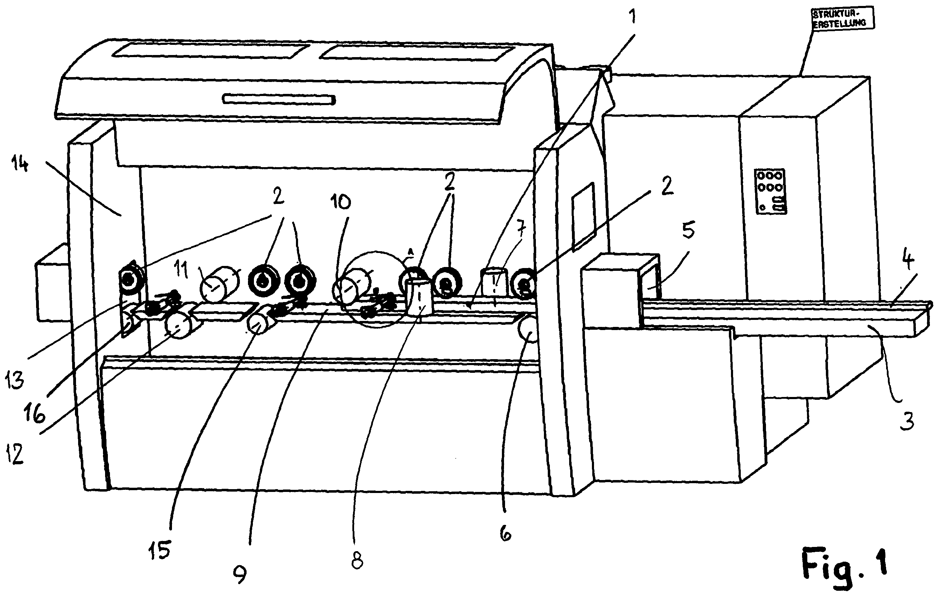

Die Kehlmaschine gemäß Fig. 1 ist eine Fräsmaschine zum vierseitigen Bearbeiten von Werkstücken aus Holz, Kunststoff und dergleichen, in der längliche Werkstücke 1 im Durchlaufverfahren in der Regel an allen 4 Seiten bearbeitet werden. Zum Transport der Werkstücke 1 sind Vorschub- bzw. Transportwalzen 2 vorgesehen, die auf den Werkstücken 1 aufliegen. Die Kehlmaschine hat einen im Einlaufbereich befindlichen Abrichttisch 3, auf dem die Werkstücke 1 der Maschine zugeführt werden. An der in Einlaufrichtung rechten Seite des Abrichttisches 3 befindet sich ein Fügelineal 4, an dem das Werkstück 1 mit seiner rechten Längsseite beim Transport anliegt. Das Fügelineal 4 ist quer zur Transportrichtung des Werkstückes 1 einstellbar, um das Maß der Spanabnahme an der rechten Längsseite des Werkstückes 1 einzustellen. Der Abrichttisch 3 lässt sich in vertikaler Richtung einstellen, wodurch das Maß der Spanabnahme an der Unterseite des Werkstückes 1 eingestellt werden kann.

Das Werkstück 1 gelangt über eine Einlauföffnung 5 in die Maschine. Im Maschinenraum ist eine horizontale untere Abrichtspindel vorgesehen, auf der ein Abrichtwerkzeug 6 drehfest sitzt, mit dem beim Durchlaufen des Werkstückes 1 dessen Unterseite spanabhebend bearbeitet, vorzugsweise geradegehobelt wird. In Transportrichtung des Werkstückes 1 hinter dem Abrichtwerkzeug 6 befindet sich eine vertikale rechte Spindel, auf der ein Werkzeug 7 sitzt, mit dem die in Transportrichtung rechte Längsseite des Werkstückes 1 bearbeitet, vorzugsweise geradegehobelt wird. Das Werkzeug 7 ist dabei ein Hobelkopf mit geraden Messern. Es kann aber auch ein Profilierwerkzeug sein, mit dem dann an der rechten Werkstückseite ein Profil hergestellt wird.

In Transportrichtung des Werkstückes 1 hinter der vertikalen rechten Spindel befindet sich eine vertikale linke Spindel, auf der ein Werkzeug 8 sitzt, das vorzugsweise ein Hobelkopf ist, mit dem die linke Werkstückseite geradegehobelt wird. Durch die Bearbeitung der rechten und der linken Werkstücklängsseite wird die Breite des fertigen Werkstückes erzeugt. Auch das Werkzeug 8 auf der linken Seite kann ein Profilierwerkzeug sein, mit dem ein Profil an der linken Längsseite des Werkstückes 1 hergestellt werden kann.

Beim Durchlauf durch die Maschine liegen die Werkstücke 1 auf einem Maschinentisch 9 auf, der eine Transportbahn bildet, auf der die Werkstücke 1 aufliegend durch die Maschine transportiert werden. Der Maschinentisch 9 ist maschinenfest und bildet die horizontale Auflage- und Bezugsebene für die Werkstücke 1.

In Transportrichtung der Werkstücke 1 nach dem rechten Werkzeug 7 wird das Werkstück 1 an einem (nicht dargestellten) Anschlag weiter durch die Maschine geführt. Das Werkstück 1 liegt mit seiner rechten, bearbeiteten Längsseite an diesem Anschlag an, der maschinenfest ist und die vertikale Anlage- und Bezugsebene bildet.

In Transportrichtung hinter der linken vertikalen Spindel hat die Maschine eine obere horizontale Spindel, auf der ein Werkzeug 10 sitzt, mit dem die Oberseite des Werkstückes 1 bei seinem Durchlauf durch die Maschine bearbeitet wird. Mit dem Werkzeug 10 kann die Werkstückoberseite beispielsweise geradegehobelt werden.

In Transportrichtung des Werkstückes 1 mit Abstand hinter dem oberen Werkzeug 10 ist ein zweites oberes Werkzeug 11 um eine horizontale Achse drehbar angetrieben.

In Transportrichtung des Werkstückes 1 mit Abstand hinter dem oberen horizontalen Werkzeug 11 befindet sich eine untere horizontale Spindel, auf der drehfest ein Werkzeug 12 sitzt, mit dem die Unterseite des Werkstückes 1 bearbeitet werden kann.

Das an allen vier Seiten bearbeitete Werkstück 1 gelangt durch eine Auslassöffnung 13 aus der Maschine. Die beschriebenen Werkzeuge befinden sich innerhalb einer Maschinenabdeckung 14.

Im Bereich zwischen den beiden oberen Werkzeugen 10 und 11 ist eine untere horizontale Tischwalze 15 vorgesehen. Eine weitere horizontale untere Tischwalze 16 befindet sich in Höhe der Auslassöffnung 13. Der Maschinentisch 9 ist für die beiden parallel zueinander liegenden Tischwalzen 15, 16 unterbrochen. Auch im Bereich des unteren Werkzeuges 12 ist der Maschinentisch 9 unterbrochen, damit eine Bearbeitung der Werkstückunterseite durch das Werkzeug 12 möglich ist.

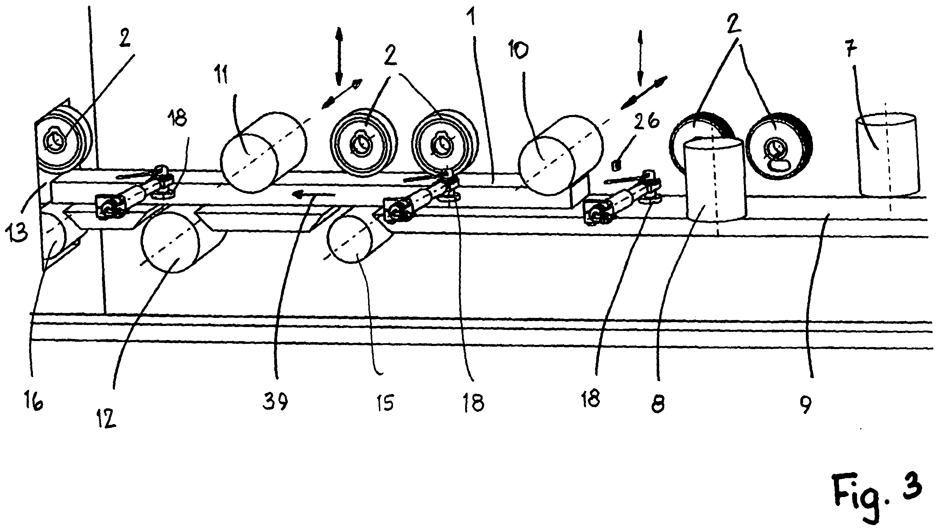

Mit den beiden oberen Werkzeugen 10, 11 können an der Werkstückoberseite 17 Strukturen eingebracht werden. Zu diesem Zweck sind die zugehörigen Spindeln bzw. Werkzeugaufnahmen über CNC-Antriebe und -Steuerungen in Abhängigkeit von der Position des Werkstückes 1 axial und radial verstellbar, was in Fig. 3 durch die entsprechenden Doppelpfeile angegeben ist.

Damit die Position des Werkstückes 1 in der Maschine jederzeit erfasst werden kann, sind vor und hinter den Werkzeugen 10, 11 Messrollen 18 vorgesehen, die im Ausführungsbeispiel an der in Transportrichtung linken Längsseite des Werkstückes 1 anliegen und entsprechend dem Vorschub des Werkstückes um ihre vertikalen Achsen gedreht werden. Im dargestellten Ausführungsbeispiel sind drei solcher Messrollen 18 vorgesehen, die sich vor dem Werkzeug 10, zwischen den Werkzeugen 10 und 11 und nach dem Werkzeug 11 befinden.

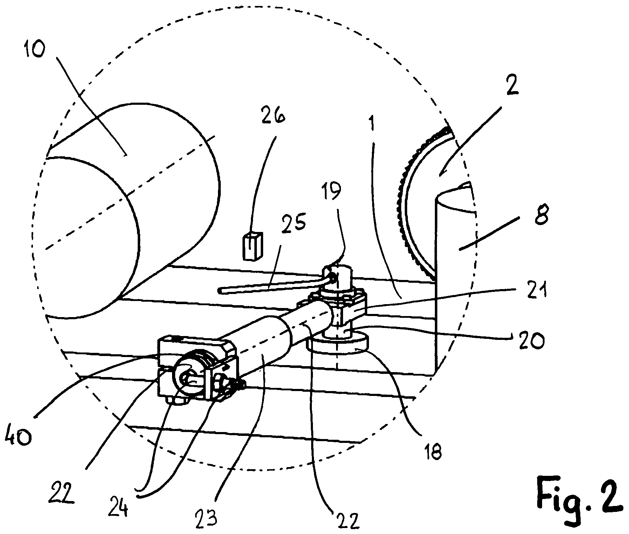

Wie Fig. 2 zeigt, sind die Messrollen 18 um eine vertikale Achse frei drehbar gelagert. Ein vertikaler Messrollenträger 20 ist in einem Halter 21 aufgenommen, der am freien Ende eines Tragarms 22 vorgesehen ist. Er ist so ausgebildet, dass er die Messrolle 18 gegen das Werkstück 1 mit einer solchen Kraft drückt, dass die Messrolle 18 zuverlässig gedreht wird. Der Tragarm 22 kann unter Federkraft oder Pneumatik/Hydraulikdruck stehen, so dass die Messrolle 18 stets gegen die linke Längsseite des Werkstückes 1 gedrückt wird. Der Tragarm 22 ist in seiner Längsrichtung verschiebbar in einem Halterohr 23 gelagert, das in geeigneter Weise maschinenfest angeordnet ist. Im dargestellten Ausführungsbeispiel steht der Tragarm 22 unter Federkraft.

Der Messrollenträger 20 weist einen mit der Messrolle drehfest verbundenen Drehgeber 19 auf, der über eine Leitung 25 die Drehgebersignale an die Maschinensteuerung liefert.

Um den Anfang des Werkstückes 1 und damit dessen exakte Position in der Maschine zu erfassen, ist in Transportrichtung vor dem ersten oberen Werkzeug 10 eine Lichtschranke 26 vorgesehen. Wird sie durch den Anfang des Werkstückes 1 durchbrochen, sendet der Sensor der Lichtschranke 26 ein entsprechendes Signal an die Maschinensteuerung. Dies stellt den Startpunkt der Positionsmessung mittels der ersten Messrolle 18 dar. Der Sensor zur Erkennung des Werkstückanfangs ist nicht auf eine Lichtschranke 26 beschränkt, sondern kann jede Art von Sensorik sein, die in der Lage ist, den Anfang eines Werkstückes, insbesondere aus Holz, bei dessen Transport durch die Maschine mit der erforderlichen Genauigkeit und Geschwindigkeit zu erfassen.

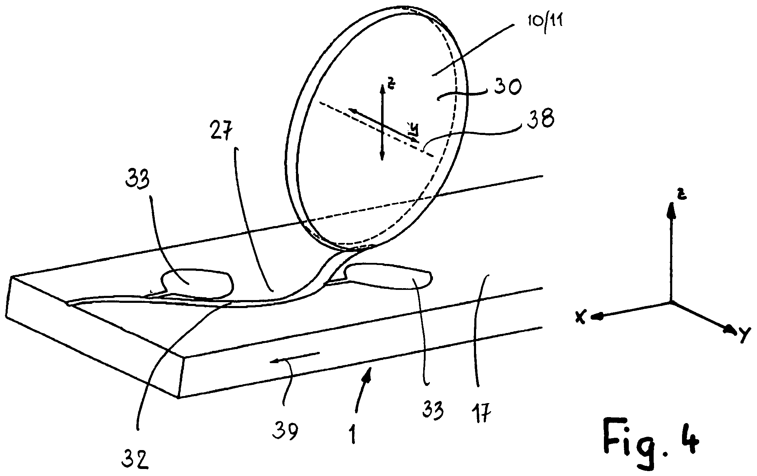

Wie sich aus den Fig. 4, 5, 8 und 9 ergibt, können mit der Maschine in der Werkstückoberseite 17 unterschiedliche Strukturen 27 bis 29 eingebracht werden. Die Strukturen werden vorteilhaft zunächst mit Hilfe eines Rechenprogrammes generiert und in einem Rechner simuliert. Hierzu werden die axialen und radialen Werkstückpositionen der Werkzeuge 10, 11 bzw. ihrer Spindeln längs des Werkstückes 1 in Form einer Tabelle generiert. Diese Verfahrensweise wird nachfolgend anhand eines Beispieles erläutert, das den Berechnungsvorgang verdeutlichen soll, jedoch nicht beschränkend anzusehen ist.

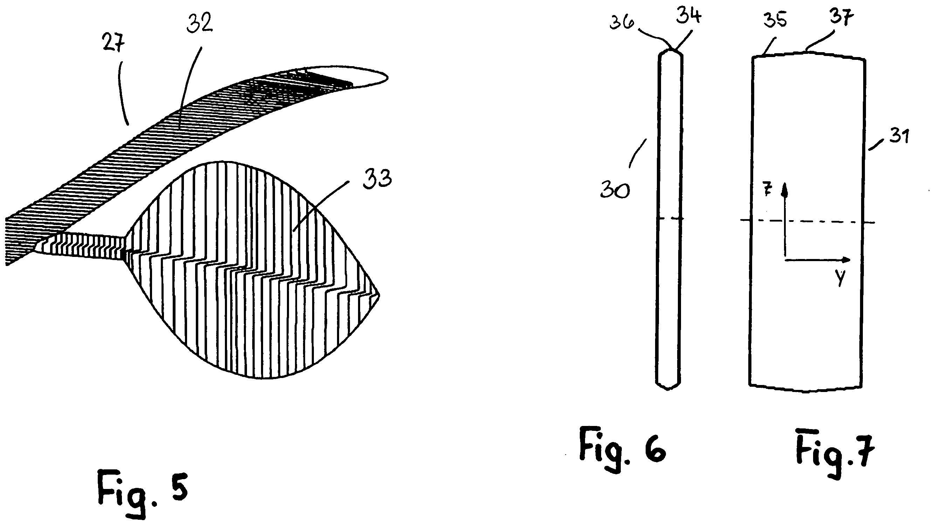

In einem ersten Schritt wird die Kontur des einzusetzenden Werkzeuges beschrieben. Wie die Fig. 6 und 7 zeigen, können die entsprechenden Werkzeuge unterschiedlich gestaltet sein, je nachdem, welche Struktur in der Werkstückoberseite 17 erzeugt werden soll. Die beiden Werkzeuge 30, 31 der Fig. 6 und 7 werden zur Erzeugung der Struktur 27 gemäß Fig. 5 herangezogen. Diese Struktur besteht aus einer Ranke 32 und von ihr abstehenden Blättern 33. Wie sich aus Fig. 4 ergibt, stehen von der Ranke 32 mehrere Blätter 33 ab. Das Werkzeug 30 gemäß Fig. 6 wird zur Erzeugung der Ranke 32 und das Werkzeug 31 gemäß Fig. 7 zur Erzeugung der Blätter 33 herangezogen. Das Werkzeug 30 ist wesentlich schmaler als das Werkzeug 31.

In diesem ersten Schritt wird die Kontur dieser beiden Werkzeuge 30, 31 durch eine y- und eine z-Koordinate definiert. Die y-Koordinate repräsentiert das axiale und die z-Koordinate das radiale Maß des Werkzeuges 30, 31, d. h. konkret den Flugkreisdurchmesser an der jeweiligen axialen Position.

Es wird darauf hingewiesen, dass das Verfahren anhand der rotationssymmetrischen Werkzeuge 30, 31 erläutert wird, mit denen ein Umfangsfräsen am Werkstück 1 durchgeführt wird. Das Verfahren kann aber auch mit anderen Werkzeugen oder Bearbeitungsaggregaten angewendet werden. Beispiele hierfür sind Oberfräs- oder Nutaggregate, Winkelköpfe, in welchen beispielsweise Schaft- oder Stiftfräser zum Einsatz kommen, und dergleichen. Das Verfahren kann auch auf Universalspindeln angewendet werden, die unterschiedliche Winkelstellungen bezüglich des Werkstückes 1 einnehmen können. Bei derartigen Werkzeugen wird auch die Winkeleinstellung als Parameter berücksichtigt.

Im Beispielsfall sind zur Herstellung der Strukturen 27 bis 29 zwei Werkzeuge bzw. zwei Spindeln vorgesehen. Die Zahl der am Prozess beteiligten Werkzeuge/Spindeln zur Herstellung der Strukturen ist allerdings nicht beschränkt.

Nachdem die Kontur der Werkzeuge 30, 31 mit Hilfe der z- und der y-Koordinaten festgelegt worden ist, erfolgt in einem nächsten Schritt die Beschreibung des zu fertigenden Werkstückes, unter anderem anhand der Werkzeugpositionsdaten. Auch diese Beschreibung wird in Tabellenform angelegt. In dem eingeführten Koordinatensystem (siehe Fig. 4) beschreibt die x-Achse die Vorschub- und Längsrichtung des Werkstückes 1, die y-Achse die Breitenrichtung und die z-Koordinate die Dickenrichtung des Werkstückes 1. Die Aufteilung der Werkstücklänge entlang der x-Achse erfolgt beispielsweise in Millimeter-Schritten, kann jedoch anwendungsspezifisch auch in einem abweichenden Raster erfolgen. Die Länge der Tabelle und deren Anzahl an Zeilen sind damit von der Länge des zu bearbeitenden Werkstückes abhängig.

Es wird nun jeder x-Position am Werkstück 1 eine definierte Werkzeugkoordinate y- bzw. z und gegebenenfalls auch ein bzw. mehrere Werkzeugwinkel für die entsprechende Spindel zugewiesen. Nachfolgend ist ein Ausschnitt einer Tabelle beispielhaft angegeben, in der für die Spindeln der beiden Werkzeuge 30, 31 jeweils die axialen (y-Koordinate) und radialen (z-Koordinate) Positionswerte bei entsprechenden Vorschubwegen (x-Koordinate) des Werkstückes 1 eingetragen sind.

**Bahntabelle**

| | Spindel 1 | | Spindel 2 | |
|---|---|---|---|---|
| Vorschub [mm] | Axial [mm] | Radial [mm] | Axial [mm] | Radial [mm] |
| 50 | 9,90 | 0,20 | 0,00 | 0,30 |
| 51 | 9,95 | 0,20 | -0,63 | 0,30 |
| 52 | 10,00 | 0,20 | -1,26 | 0,30 |
| 53 | 10,00 | 0,21 | -1,88 | 0,31 |
| 54 | 10,00 | 0,24 | -2,51 | 0,31 |
| 55 | 10,00 | 0,28 | -3,13 | 0,31 |
| 56 | 10,00 | 0,34 | -3,75 | 0,32 |
| 57 | 10,00 | 0,43 | -4,36 | 0,33 |
| 58 | 10,10 | 0,52 | -4,97 | 0,34 |
| ⋮ | ⋮ | ⋮ | ⋮ | ⋮ |

Die axialen (y-Koordinate) und radialen (z-Koordinate) Positionsdaten in der Tabelle berücksichtigen definierte Referenzpunkte des Werkzeuges, beispielsweise das axiale Maß zwischen Werkzeuganlage und definiertem Profilpunkt und größter Flugkreisdurchmesser, im Ausführungsbeispiel z. B. Axialmass und Flugkreisdurchmesser der Profilspitze, und des Werkstückes 1, nämlich die Anlage des Werkstückes 1 am Anschlag in der Maschine und auf dem Maschinentisch 9. Im Ausführungsbeispiel mit den Werkzeugen 30, 31 nach den Fig. 6 und 7 sind damit die axiale Position der mit dem Werkstück 1 in Eingriff kommenden Werkzeugspitze und die radiale Eintauchtiefe des Werkzeuges in das Werkstück in y-Richtung im jeweiligen x-Koordinatenpunkt des Werkstückes festgelegt. Außerdem können, sofern die Winkelposition des Werkzeuges eingestellt werden kann und erfasst werden soll, der α-Winkel sowie der β-Winkel des Werkzeuges relativ zum Werkstück 1 definiert werden, so dass anhand dieser Winkelangaben bei der Bearbeitung des Werkstückes in der Maschine die entsprechende Spindel positioniert werden kann.

In der beschriebenen Weise werden die Koordinatenwerte für die zur Strukturierung herangezogenen Werkzeuge sowie deren Positionsdaten an den verschiedenen Werkstücklängspositionen in Tabellenform (Bahntabelle) erfasst. Diese Tabelle wird im Speicher des Rechners abgelegt, so dass anschließend mit dem Rechner in noch zu beschreibender Weise eine Simulation durchgeführt werden kann.

Die Anzahl und die Lage der für die Strukturierung des Werkstückes 1 heranzuziehenden Spindeln bzw. Werkzeuge ist beliebig und nicht durch das eingesetzte System beschränkt. Ebenso ist das Erzeugen der Struktur nicht, wie im Ausführungsbeispiel beschrieben, auf die Werkstückoberseite beschränkt, sondern kann alternativ oder zusätzlich auch an den anderen Werkstückseiten rechts, links oder unten erfolgen. Die Strukturen 27 bis 29 können mit allen in der beschriebenen Maschine vorhandenen Werkzeugen 7, 8, 10, 11, 12 erzeugt werden. Ggf. kann die Maschine weitere rechte, linke, obere oder untere Werkzeuge aufweisen. Darüber hinaus können auch Werkzeuge auf Universalspindeln oder auf schrägen Spindeln verwendet werden. Auch die Werkzeuge von Nutaggregaten oder Winkelaggregaten können für die Strukturierung des Werkstückes in seiner Oberseite 17 bzw. den anderen Außenseiten eingesetzt werden.

Die in der beschriebenen Weise erstellte Tabelle wird nunmehr dazu herangezogen, die Werkzeuggeometrie und Werkzeugpositionsdaten entlang der Werkstücklänge so miteinander zu verknüpfen, dass die Struktur in der Werkstückoberseite 17 erhalten wird. Da beispielhaft in Millimeter-Schritten zeilenweise die Lage und die Eindringtiefe sowie die Überlagerung aller am Prozess beteiligter Werkzeuge berechnet wird, kann das Aussehen der Struktur im Werkstück exakt vorherberechnet werden. Am Rechner lässt sich somit eine Simulation der Oberflächenstrukturierung mit Hilfe der in der Tabelle enthaltenen Werten durchführen.

Die sich aus den Tabellenwerten ergebende berechnete Struktur kann auch optisch auf dem Bildschirm des Rechners als 3D-Effekt dargestellt werden.

Im Rahmen der Simulation des Strukturierungsprozesses wird unter Berücksichtigung der maximalen Beschleunigungs- und Geschwindigkeitsgrenzen der Maschine überprüft, ob die Struktur mit der vom Anwender definierten Vorschubgeschwindigkeit des Werkstückes 1 in x-Richtung produziert werden kann. Das Rechnerprogramm kann so ausgebildet sein, dass eine Überlastung der Maschinendynamik angezeigt und eine für die Strukturerzeugung maximal mögliche Vorschubgeschwindigkeit des Werkstückes 1 errechnet wird.

Der Anwender hat somit die Möglichkeit, mittels der Simulation sehr genau die entsprechenden Parameter festzulegen, die später zur Einstellung der Werkzeugspindeln und des Vorschubes der Werkstücke 1 benötigt werden.

Bei der Simulation können erforderliche Korrekturen der Bahnkurven, durch welche die Form der Struktur bestimmt wird, einfach vorgenommen werden. Sobald die Simulation erfolgreich abgeschlossen ist, wird aus der im Rechner abgelegten Tabelle ein CNC-Programm generiert und an die Maschinensteuerung übergeben.

Die Erstellung der Tabelle mit den Daten für die Werkzeuge und die Werkzeugpositionen kann durch einzelne Dateneingabe erfolgen, indem von Hand für die einzelnen Schritte längs des Werkstückes die entsprechenden Daten eingegeben werden. Grundsätzlich ist es aber auch möglich, die Dateneingabe durch vorgelagerte Rechenalgorithmen automatisch vornehmen zu lassen, gegebenenfalls unter Nutzung und Unterstützung von Computerprogrammen mit graphischer Oberfläche, mittels derer sich die Struktur grafisch erzeugen lässt.

Nachdem das CNC-Programm generiert und in der Maschinensteuerung beispielsweise als Bahntabelle abgelegt worden ist, kann die Strukturierung der Werkstücke 1 in der Maschine durchgeführt werden. Der Maschinenvorschub erhält zunächst eine definierte Vorschubgeschwindigkeit, die in der beschriebenen Weise vorab durch die Simulation im Rechner ermittelt worden ist oder in Abhängigkeit der Anwendung vorgegeben bzw. eingestellt wird. Die Vorschubgeschwindigkeit bleibt während des Bearbeitungsprozesses für das aktuelle Werkstück 1 konstant. Die zur Strukturierung herangezogenen Spindeln bzw. Werkzeuge werden dann über die CNC-Antriebe und -Steuerungen in Abhängigkeit von der Werkstückposition in die entsprechenden axialen und radialen Startpositionen verfahren. Beim Durchlauf des Werkstückes 1 durch die Maschine wird das CNC-Programm abgearbeitet, wodurch die gewünschte Struktur in der Werkstückoberseite 17 erzeugt wird.

In der einfachsten Ausführung des Verfahrens kann auf die vorherige Simulation der Struktur oder Kontur verzichtet werden. Die Werkzeugpositionsdaten werden dabei beispielsweise in Form der Bahntabelle an die Maschinensteuerung übergeben.

In einer weiteren Ausbaustufe der Maschine kann die Vorschubgeschwindigkeit in Abhängigkeit der Geometrie des Strukturmusters während des Werkstückdurchlaufes automatisch geändert und dieser angepasst werden. Damit können vorteilhaft die vorgegebenen Beschleunigungs- und Geschwindigkeitsgrenzen der Maschine bei unterschiedlichen Strukturverläufen eingehalten werden, beispielsweise bei steilen Konturanstiegen in Richtung quer zur Vorschubrichtung 39. Bei Veränderung der Vorschubgeschwindigkeit ändert sich allerdings der Hobelschritt, welcher an den bearbeiteten Flächen sichtbar wird. Ist dies je nach Anwendung nicht akzeptabel, muss dies durch weitere Maßnahmen kompensiert werden, beispielsweise durch die Bearbeitung der relevanten Seiten in einem separaten Durchlauf, oder durch Anpassung der Spindeldrehzahlen der entsprechenden Bearbeitungsspindeln.

Die exakte Werkstückposition innerhalb der Maschine wird mittels der Lichtschranke 26 ermittelt, deren Position in der Maschine ebenso wie die Position der Bearbeitungsspindeln ortsfest konstruktiv festgelegt und maßlich bekannt ist und als Referenz für die übrigen Messsysteme dient. Sobald das in Transportrichtung vordere Ende des Werkstückes 1 die Lichtschranke 26 durchbricht, ist die Position dieses vorderen Werkstückendes bekannt und das von der Lichtschranke 26 gesendete Signal dient als Startpunkt für die Positionsmessung mittels der ersten Messrolle 18. Während des Vorschubes des Werkstückes 1 ist die Werkstückposition zu jeder Zeit in Bezug zu den zur Strukturierung herangezogenen Werkzeugen 10, 11 unter Nutzung der Drehgebersignale der Messrollen 18 bekannt, so dass, nachdem das Werkstück das erste Werkzeug 10, 11 erreicht hat, nunmehr wegabhängig die Werkzeuge 10, 11 die programmierten Axial- und/oder Radialverstellungen CNC-gesteuert vornehmen. Die Messrollen 18 sind wie beschrieben jeweils vor und nach den Werkzeugen 10, 11 vorgesehen. Die exakte Werkstückposition wird während dessen Durchlauf über eine Messwertübergabe kaskadiert an die nacheinander angeordneten Messräder 18 unter Berücksichtigung ihrer relativen Position übergeben. Die Messräder 18 laufen lose am Werkstück 1 bei dessen Vorschub mit. In Abhängigkeit von der relativen Position des Werkstückes 1 zu den jeweiligen Werkzeugen 10, 11 bzw. ihren Spindeln kann die jeweils optimal geeignete Messrolle 18 als aktives Messsystem herangezogen und die Messwerte ihres Drehgebers als Führungsgröße für die am Strukturierungsprozess beteiligten Spindeln verwendet werden.

Die Umschaltung von der einen Messrolle 18 auf eine andere Messrolle 18 bzw. deren jeweiligen Drehgebern 19 (Geberumschaltung) erfolgt "on the fly" ohne Unterbrechung des Strukturierungsprozesses mit der entsprechenden Messwertübergabe. Die Zahl der Messsysteme ist nicht auf zwei Messrollen 18 pro Werkzeug 10, 11 beschränkt, sondern kann in Abhängigkeit von der Länge der Werkstücke 1 erweitert werden.

Die Verwendung der vom Werkstück 1 angetriebenen Messrollen 18 hat den Vorteil, dass Fehler, die aufgrund von Geschwindigkeitsunterschieden (Schlupf) zwischen dem Werkstück 1 und dem Vorschubantrieb entstehen können, ausgeschlossen werden.

Als Positionsgeber werden nur diejenige Messrollen 18 herangezogen, die am Werkstück 1 bei dessen Durchlauf durch die Maschine anliegen. Dies wird über einen Sensor 24 überwacht (Fig. 2). Der Sensor 24 ist an einem plattenförmigen Halter 40 befestigt und erfasst die Bewegung des Tragarms 22, wenn die Messrolle 18 mit dem Werkstück 1 in Kontakt kommt. Der Tragarm 22 ragt durch das Halterohr 23 in Richtung auf den Sensor 24. Die Messrolle 18 ist so angeordnet, dass sie zusammen mit dem Tragarm 22 zurückgeschoben wird, wenn sie in Kontakt mit dem Werkstück 1 gelangt. Die dadurch hervorgerufene Axialbewegung des Tragarms 22 wird vom Sensor 24 erfasst, der ein entsprechendes Signal abgibt. Da die Messrollen 18 in Transportrichtung mit Abstand hintereinander liegen, kommen die Messrollen 18 nacheinander mit dem Werkstück in Kontakt bzw. verlieren nacheinander wieder ihren Kontakt mit dem Werkstück, wenn es an ihnen vorbeitransportiert worden ist. Entsprechend erfolgt beim Durchlauf des Werkstückes automatisch eine Umschaltung zwischen den Drehgebern 19 der Messrollen 18. Die Position der Messrollen 18 in der Maschine sowie ihre Zuordnung zu den Werkzeugen 10, 11 bzw. deren Spindeln und ihre Zuordnung zueinander ist geometrisch festgelegt und wird in die Auswertung und Positionsermittlung des Werkstückes 1 einbezogen. Mit den Drehgebern 19 der Messrollen 18 kann in Verbindung mit dem durch die Lichtschranke 26 exakt bestimmten Werkstückanfang die Position des Werkstückes innerhalb der Maschine sehr genau bestimmt werden, so dass die Werkzeuge 10, 11 die gewünschte Struktur in der Werkstückoberseite 17 sehr genau herstellen können.

Bei der Darstellung gemäß Fig. 1 hat das Werkstück 1 mit seiner vorderen Stirnseite gerade das erste obere Werkzeug 10 erreicht. Der Werkstückanfang wurde bereits durch die Lichtschranke 26 erkannt, und die erste Messrolle 18 ist als alleinige Messrolle 18 mit dem Werkstück 1 in Eingriff. Diese Messrolle 18 ist somit das aktive Messsystem und liefert als Führungsgröße für das erste obere Werkzeug 10 die entsprechenden Messsignale an die Maschinensteuerung. Beim weiteren Werkstückdurchlauf durch die Maschine hat bei der Darstellung gemäß Fig. 3 das Werkstück 1 die erste (rechte) Messrolle 18 bereits verlassen. Für die Bearbeitung durch das Werkzeug 10 wird die mittlere Messrolle 18 und für die Bearbeitung durch das Werkzeug 11 die mittlere oder linke Messrolle 18 herangezogen, die beide am Werkstück 1 anliegen. Spätestens wenn die rechte Messrolle 18 vom Werkstück 1 freikommt, übergibt sie ihren durch den zugehörigen Drehgeber 19 ermittelten Wert der mittleren Messrolle 18, die diesen Wert übernimmt. Ausgehend von diesem Wert inkrementiert der Drehgeber 19 der mittleren Messrolle 18 die weiteren Werte. Spätestens wenn die mittlere Messrolle 18 ihrerseits vom Werkstück 1 freikommt, übergibt sie ihren Wert an die linke Messrolle 18. Dann erfolgt die Inkrementierung, ausgehend vom übernommenen Wert der mittleren Messrolle 18, mit der linken Messrolle. Auf diese Weise erfolgt die kaskadierte Messwertübergabe an die nacheinander angeordneten Messräder 18. Auf diese Weise ist eine exakte Kenntnis der Werkstückposition beim Durchlauf des Werkstückes 1 durch die Maschine sichergestellt. Die Messwertübergabe bzw. Geberumschaltung kann bereits auch schon dann erfolgen, wenn das Werkstück zuverlässig in den Erfassungsbereich der nachfolgenden Messrolle gelangt ist, spätestens jedoch, wenn es aus dem Erfassungsbereich der vorherigen Messrolle gelangt, so dass jederzeit sichergestellt ist, dass immer nur eine Messrolle, die mit dem Werkstück in Kontakt ist, als aktiver Positionsgeber wirkt.

Die zur Strukturierung heranzuziehenden Werkzeuge 30, 31 haben eine an die Art und/oder Form der Struktur angepasste Form bzw. Profilgebung, wie beispielhaft anhand der Fig. 6 und 7 zu erkennen ist. Je nach Art der Struktur können die Werkzeuge unterschiedlich breit sein. Die Umfangsfläche 34, 35 der Werkzeuge 30, 31 sind im Axialschnitt derart V-förmig gestaltet, dass sie in halber Breite eine umlaufende Kante 36, 37 aufweisen. Die Umfangsfläche 34, 35 kann aber auch jede andere geeignete Formgebung aufweisen.

Anhand der Fig. 4 und 5 wird beispielhaft die Erzeugung der Struktur 27 in der Werkstückoberseite 17 erläutert. Das eingesetzte Werkzeug 10/11 ist so angeordnet, dass seine horizontale Drehachse 38 senkrecht zur Vorschubrichtung 39 des Werkstückes 1 und parallel zur Oberseite des Werkstückes 17, d.h. in der x-y-Ebene liegt. Das Werkzeug 10/11 wird entsprechend dem Programm in z- und/oder in y-Richtung relativ zum Werkstück 1 bewegt, um die gewünschte Struktur herzustellen. In Fig. 4 hat beispielsweise die Ranke 32 der Struktur 27 einen in Längsrichtung des Werkstückes 1 gekrümmten, etwa sinusförmigen Verlauf. Dementsprechend bewegt sich das Werkstück 10/11 entsprechend dem gewünschten Rankenverlauf in y-Richtung. Außerdem wird durch die Verstellung in z-Richtung die Tiefe und Breite der Ranke 32 bestimmt.

Da die Ranke 32 schmal ist, wird zu deren Herstellung als Werkzeug 10/11 das schmale Werkzeug 30 gemäß Fig. 6 eingesetzt.

Zur Erzeugung der Blätter 33 wird das breitere Werkzeug 31 gemäß Fig. 7 herangezogen. Die unterschiedliche Breite des Blattes 33 wird dadurch erreicht, dass das Werkzeug 31 mehr oder weniger weit in z-Richtung in das Werkstück 1 eintaucht.

In Fig. 5 sind die Hobelschritte eingezeichnet, die sich bei der Erzeugung der Struktur durch die nicht dargestellten Werkzeugschneiden der Werkzeuge 30, 31 ergeben. In der Regel werden die sichtbaren Hobelschritte von der am weitesten herausstehenden Schneide des Werkzeuges 10/11 bei jeder Werkzeugumdrehung erzeugt. Deren Abstand ist damit abhängig von der Werkzeugdrehzahl und der Vorschubgeschwindigkeit. Während der Strukturerzeugung wird das Werkstück 1 kontinuierlich durch die Maschine transportiert. Die schrittweise Einstellung der jeweiligen Werkzeuge in z- und/oder y-Richtung ist auf die Vorschubgeschwindigkeit des Werkstückes 1 abgestimmt, so dass die Struktur in gewünschtem Maße auf der Werkstückoberseite 17 hergestellt werden kann. Die notwendige Verfahrgeschwindigkeit und Beschleunigung der jeweiligen CNC-Verstellachse der Werkzeuge wird von der Steuerung berechnet und vorgegeben.

Im beispielhaften Fall wird die Struktur 27 durch zwei Werkzeuge erzeugt. Grundsätzlich reicht aber auch ein Werkzeug bereits aus, wenn es sich um eine einfache Struktur handelt. Es können aber auch mehr als zwei Werkzeuge zur Erzeugung der Struktur auf der Werkstückoberseite 17 eingesetzt werden.

Im dargestellten Ausführungsbeispiel rotieren die Werkzeuge um senkrecht zur Vorschubrichtung 39 und in der x-y-Ebene liegende Horizontalachsen 38. Das Werkzeug 10, 11 kann darüber hinaus um die z-Achse und/oder auch um die x-Achse schwenkbar ausgebildet sein, so dass die Drehachse 38 abweichend von 90° zur Vorschubrichtung 39 des Werkstückes 1, in der x-y-Ebene gemessen, und/oder abweichend von 0° zu der Werkstückoberseite (x-y-Ebene), in der y-z-Ebene gemessen, verläuft, wenn entsprechende Strukturen in der Werkstückoberseite 17 gefertigt werden sollen.

Der in Fig. 5 erkennbare Versatz der Hobelschritte ergibt sich dadurch, dass sich während des Eingriffs des Werkzeuges 30, 31 sowohl das Werkstück 1 in Vorschubrichtung 39 als auch das Werkzeug 30, 31 quer dazu bewegt.

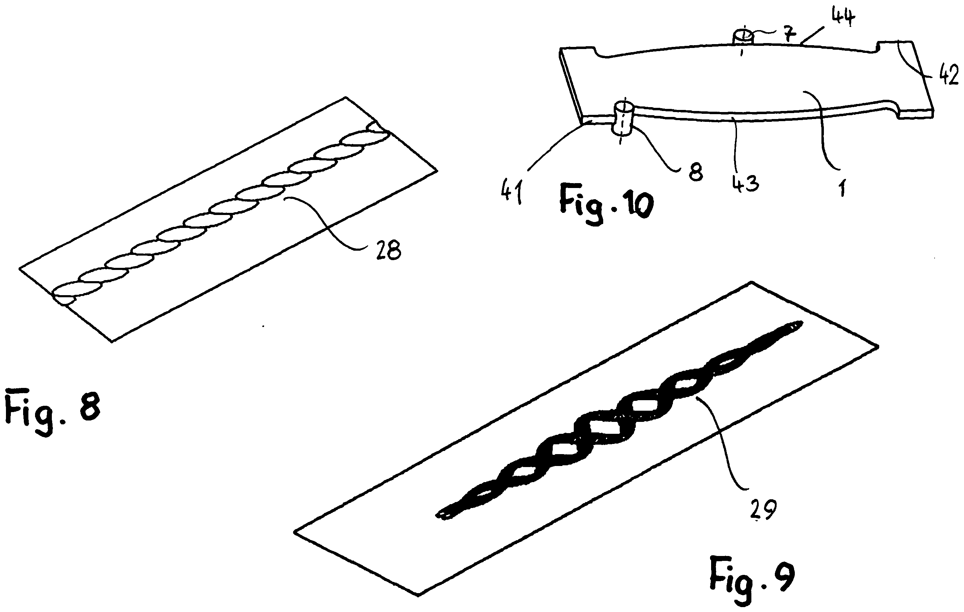

Die Fig. 8 und 9 zeigen weitere Beispiele von Strukturen 28 und 29, die sich in der beschriebenen Weise in der Werkstückoberseite 17 erzeugen lassen. Die Struktur 28 mit aneinander gereihten Vertiefungen hat beispielsweise optisch das Aussehen einer gewendelten Schnur, während die Struktur 29 eine Art Zopfmuster darstellt. Auch für die Erzeugung dieser beiden beispielhaften Strukturen 28, 29 sind jeweils zwei Werkzeuge auf zwei Spindeln notwendig. Mit den Werkzeugen lassen sich gezielt die unterschiedlichsten Strukturen erzeugen, wobei ihre Verstellung in z- und y-Richtung entsprechend eingestellt wird.

Anhand von Fig. 10 wird die Möglichkeit beschrieben, mit den Werkzeugen der Maschine das Werkstück mit einer gewünschten Kontur zu versehen. Das Werkstück 1 wird hierbei an seinen beiden Längsseiten 41, 42 mit der Kontur 43, 44 versehen. Der Verlauf der Konturen 43, 44 an beiden Längsseiten wird in diesem Falle durch die auf den vertikalen Spindeln sitzenden Werkzeugen 7 und 8 erzeugt. Wie bei den Werkzeugen 10, 11 werden in Abhängigkeit von den Daten des Werkstückes sowie von den Daten des Werkzeuges 7,8 die Werkzeugpositionen längs des Werkstückes 1 zur Erzeugung der Kontur 43, 44 festgelegt und der Maschinensteuerung übergeben. Vorteilhaft werden die Daten gespeichert, und in einem Simulationsverfahren wird mit den gespeicherten Daten vorab die Erzeugung der Kontur 43, 44 durchgeführt. Erst nach erfolgreicher Simulation, werden die gespeicherten Daten der Maschinensteuerung übergeben. Sie arbeitet das CNC-Programm während des Durchlaufes des Werkstückes 1 durch die Maschine ab. Das jeweilige Werkzeug 7, 8 wird über die CNC-Antriebe in Abhängigkeit von der Werkstückposition in die erforderlichen Positionen verstellt. Die Werkstückposition wird beim Durchlauf des Werkstückes 1 durch die Maschine ebenfalls erfasst. Da in diesem Ausführungsbeispiel die Kontur an der rechten und linken Werkstücklängsseite erzeugt wird, sind die Messelemente zur Erfassung der Werkstückposition vorteilhaft an der Ober- oder Unterseite des Werkstückes angeordnet. Die Herstellung der Kontur 43, 44 ist somit prinzipiell gleich wie die Herstellung der beschriebenen Strukturen 27 bis 29.

## Patentansprüche

1. Verfahren zur Erzeugung von Strukturen oder Konturen in einem Werkstück (1) aus Holz, Kunststoff und dergleichen, bei dem in einer Kehlmaschine mit wenigstens einem drehbar angetriebenen Werkzeug (10, 11) an dem Werkstück (1) die Kontur (43, 44) durch Werkstückabtrag hergestellt wird, wobei in Abhängigkeit von den Daten des Werkstückes (1) und des Werkzeuges (10, 11) die Werkzeugpositionen längs des Werkstücks (1) zur Erzeugung der Kontur (43, 44) festgelegt und die Daten einer Maschinensteuerung übergeben werden, die das auf den Daten basierende CNC-Programm während des Durchlaufes des Werkstückes (1) durch die Kehlmaschine abarbeitet und das Werkzeug (10, 11) über CNC-Antriebe in Abhängigkeit von der Werkstückposition in die erforderlichen Positionen verstellt, wobei die Werkstückposition beim Durchlauf des Werkstückes (1) durch die Kehlmaschine erfasst wird, indem zur Positionserfassung des Werkstückes (1) in der Kehlmaschine (10, 11) wenigstens ein Messelement (18) herangezogen wird, das an die Maschinensteuerung angeschlossen ist und den Vorschubweg des Werkstückes (1) beschreibende
Signale an die Maschinensteuerung liefert, **dadurch gekennzeichnet, dass** der Anfang des Werkstückes (1) durch wenigstens einen Sensor (26) erfasst wird, der bei Erfassen des Werkstückanfanges ein Signal an die Maschinensteuerung liefert, das als Startpunkt der Positionsmessung mittels des Messelementes (18) dient.

2. Verfahren nach Anspruch 1,
**dadurch gekennzeichnet, dass** das Messelement (18) vor dem Werkzeug (10, 11) angeordnet ist.

3. Verfahren nach Anspruch 1 oder 2,
**dadurch gekennzeichnet, dass** zur Positionserfassung des Werkstückes (1) in der Kehlmaschine nach dem Werkzeug (10, 11) wenigstens ein weiteres Messelement (18) verwendet wird.

4. Verfahren nach einem der Ansprüche 1 bis 3,
**dadurch gekennzeichnet, dass** der Sensor (26) in Vorschubrichtung (39) des Werkstückes (1) vor dem Werkzeug (10, 11) und nach dem Messelement (18) angeordnet ist.

5. Verfahren nach einem der Ansprüche 1 bis 4,
**dadurch gekennzeichnet, dass** die Daten des Werkzeuges (7, 8, 10, 11, 30, 31) die Kontur des Werkzeuges angeben.

6. Verfahren nach einem der Ansprüche 1 bis 5,
**dadurch gekennzeichnet, dass** die Werkzeugposition des Werkzeuges (7, 8, 10, 11, 30, 31) in festgelegten Schritten längs des Werkstückes (1) bestimmt und gespeichert werden, vorzugsweise in Form einer Tabelle, z.B. einer Bahntabelle.

7. Verfahren nach einem der Ansprüche 1 bis 6,
**dadurch gekennzeichnet, dass** die Werkzeugpositionen des Werkzeuges (7, 8, 10, 11, 30, 31) in axialer und/oder radialer Richtung bestimmt werden.

8. Verfahren nach einem der Ansprüche 1 bis 7,
**dadurch gekennzeichnet, dass** die Winkellage des Werkzeuges (7, 8, 10, 11, 30, 31) relativ zur Vorschubrichtung (39) und zur bearbeitenden Fläche des Werkstückes (1) bestimmt und abgespeichert wird.

9. Verfahren nach einem der Ansprüche 1 bis 8,
**dadurch gekennzeichnet, dass** das Werkzeug (7, 8, 10, 11, 30, 31) über CNC-Antriebe in Abhängigkeit von der Werkstückposition in die erforderlichen axialen und/oder radialen Positionen während des Durchlaufes des Werkstückes (1) durch die Kehlmaschine verstellt wird.

10. Verfahren nach einem der Ansprüche 1 bis 9,
**dadurch gekennzeichnet, dass** je nach Position des Werkstückes (1) relativ zu Bearbeitungsspindeln der Werkzeuge (7, 8, 10, 11, 30, 31) und den Messelementen (18) das jeweils optimal geeignete Messelement (18) als aktives Messelement herangezogen wird, wobei vorteilhaft die Messwerte des ausgewählten aktiven Messelementes (18) als Führungsgröße für die jeweiligen Werkzeugachsverstellungen herangezogen werden.

11. Verfahren nach einem der Ansprüche 1 bis 10,
**dadurch gekennzeichnet, dass** die Daten des Werkstückes (1) und des Werkzeuges (7, 8, 10, 11, 30, 31) erfasst und zusammen mit den längs des Werkstückes (1) bestimmten Werkzeugpositionsdaten gespeichert werden, dass mit den gespeicherten Daten in einem Simulationsverfahren die Erzeugung der Struktur (27 bis 29) oder Kontur (43, 44) durchgeführt wird, und dass nach erfolgreicher Simulation die gespeicherten Daten der Maschinensteuerung übergeben werden.

12. Verfahren nach einem der Ansprüche 1 bis 11,
**dadurch gekennzeichnet, dass** die Messelemente (18) ihre Messwerte kaskadenartig einander übergeben.

13. Kehlmaschine, insbesondere zur Durchführung des Verfahrens nach einem der Ansprüche 1 bis 12,
mit wenigstens einer Transportbahn für die Werkstücke (1), entlang welcher die Werkstücke (1) durch die Kehlmaschine zur Bearbeitung transportiert werden, mit drehbar angetriebenen Werkzeugen (10, 11), von denen wenigstens ein Werkzeug zur Erzeugung einer Struktur (27 bis 29) oder einer Kontur (43, 44) an dem Werkstück (1) vorgesehen ist, wobei zur Erfassung der Werkstückposition in der Kehlmaschine längs der Transportbahn für die Werkstücke (1) vor dem Werkzeug (10, 11) wenigstens ein Messelement (18) vorgesehen ist, das an die Maschinensteuerung angeschlossen ist und den Vorschubweg des Werkstückes (1) beschreibende Signale an die Maschinensteuerung liefert, mit der entsprechend den Signalen das Werkzeug (10, 11) in die jeweiligen Werkzeugpositionen verstellt wird,
**dadurch gekennzeichnet, dass** zur Positionserfassung des Werkstückes (1) in der Kehlmaschine nach dem Werkzeug (10, 11) wenigstens ein weiteres Messelement (18) vorgesehen ist, das an die Maschinensteuerung angeschlossen ist und den Vorschubweg des Werkstückes (1) beschreibende Signale an die Maschinensteuerung liefert, und dass zur Erfassung des Anfanges des Werkstückes (1) wenigstens ein Sensor (26) in der Kehlmaschine vorgesehen ist, der an die Maschinensteuerung angeschlossen ist und bei Erfassen des Werkstückanfanges ein Signal an die Maschinensteuerung liefert, das als Startpunkt der Positionsmessung mittels des Messelementes (18) dient.

14. Kehlmaschine nach Anspruch 13,
**dadurch gekennzeichnet, dass** der Sensor (26) in Vorschubrichtung (39) des Werkstückes (1) vor dem Werkzeug (10, 11) und nach dem Messelement (18) angeordnet ist.

15. Kehlmaschine nach Anspruch 13 oder 14,
**dadurch gekennzeichnet, dass** die Messelemente (18) kaskadenartig miteinander verbunden sind.

16. Kehlmaschine nach einem der Ansprüche 13 bis 15,
**dadurch gekennzeichnet, dass** das Messelement (18) eine vorzugsweise unter Druck am Werkstück (1) anliegende Messrolle ist, die am Werkstück (1) bei dessen Vorschub durch die Kehlmaschine anliegt und vorzugsweise durch das Werkstück (1) bei dessen Vorschub drehbar angetrieben wird.

17. Kehlmaschine nach einem der Ansprüche 13 bis 16,
**dadurch gekennzeichnet, dass** das Messelement (18) einen Drehgeber (19) aufweist, dessen Signale an die Maschinensteuerung geliefert werden.

18. Kehlmaschine nach einem der Ansprüche 13 bis 17,
**dadurch gekennzeichnet, dass** das Messelement (18) an einem quer zur Vorschubrichtung (39) des Werkstückes (1) verstellbaren Träger (22) vorgesehen ist, dessen Verstellung vorteilhaft durch wenigstens einen Sensor (24) erfasst wird.

## Claims

1. A method for producing structures or contours in a workpiece (1) made from wood, plastic and the like, in which the contour (43, 44) is produced on the workpiece (1) in a moulder by workpiece cutting using at least one rotatably driven tool (10, 11), the tool positions along the workpiece (1) for producing the contour (43, 44) being determined as a function of the data of the workpiece (1) and the tool (10, 11) and the data being transmitted to a machine control, which executes the CNC program based on the data during the passage of the workpiece (1) through the moulder and adjusts the tool (10, 11) into the required positions by means of CNC drives as a function of the workpiece position, the workpiece position being detected during the passage of the workpiece (1) through the moulder in that at least one measuring element (18) is used for detecting the position of the workpiece (1) in the moulder (10, 11), which measuring element is connected to the machine control and delivers signals describing the feed path of the workpiece (1) to the machine control,
**characterized in that** the beginning of the workpiece (1) is detected by at least one sensor (26), which, upon detection of the workpiece beginning, delivers a signal to the machine control, which is used as a starting point of the position measurement by means of the measuring element (18).

2. The method according to Claim 1,
**characterized in that** the measuring element (18) is arranged upstream of the tool (10, 11).

3. The method according to Claim 1 or 2,
**characterized in that** at least one further measuring element (18) is used for position detection of the workpiece (1) in the moulder downstream of the workpiece (10, 11).

4. The method according to one of Claims 1 to 3,
**characterized in that** the sensor (26) is arranged upstream of the tool (10, 11) and downstream of the measuring element (18) in the feed direction (39) of the workpiece (1).

5. The method according to one of Claims 1 to 4,
**characterized in that** the data of the tool (7, 8, 10, 11, 30, 31) specify the contour of the tool.

6. The method according to one of Claims 1 to 5,
**characterized in that** the tool position of the tool (7, 8, 10, 11, 30, 31) is determined and saved, preferably in the form of a table, e.g. a path table, in fixed steps along the workpiece (1).

7. The method according to one of Claims 1 to 6,
**characterized in that** the tool positions of the tool (7, 8, 10, 11, 30, 31) are determined in the axial and/or radial direction.

8. The method according to one of Claims 1 to 7,
**characterized in that** the angular position of the tool (7, 8, 10, 11, 30, 31) relatively to the feed direction (39) and the surface of the workpiece (1) to be machined is determined and saved.

9. The method according to one of Claims 1 to 8,
**characterized in that** the tool (7, 8, 10, 11, 30, 31) is adjusted by means of CNC drives as a function of the workpiece position into the required axial and/or radial positions during the passage of the workpiece (1) through the moulder.

10. The method according to one of Claims 1 to 9,
**characterized in that**, depending on the position of the workpiece (1) relative to machining spindles of the tools (7, 8, 10, 11, 30, 31) and the measuring elements (18), the respectively optimally suitable measuring element (18) is used as active measuring element, wherein preferably the measurement values of the selected active measuring element (18) are used as a reference variable for the respective tool-axis adjustments.

11. The method according to one of Claims 1 to 10,
**characterized in that** the data of the workpiece (1) and the tool (7, 8, 10, 11, 30, 31) are detected and saved together with the tool position data determined along the workpiece (1), **in that** the production of the
structure (27 to 29) or contour (43, 44) is carried out using the stored data in a simulation method, and **in that** following a successful simulation, the saved data are transferred to the machine control.

12. The method according to one of Claims 1 to 11,
**characterized in that** the measuring elements (18) transfer their measurement values to one another in a cascade-like manner.

13. A moulder, particularly for carrying out the method according to one of Claims 1 to 12,
having at least one transport path for the workpieces (1), along which the workpieces (1) are transported through the moulder for machining, having rotatably driven tools (10, 11), of which at least one tool is provided for producing a structure (27 to 29) or a contour (43, 44) on the workpiece (1), at least one measuring element (18) being provided for detecting the workpiece position in the moulder upstream of the tool (10, 11) along the transport path for the workpieces (1), which measuring element is connected to the machine control and delivers signals describing the feed path of the workpiece (1) to the machine control, with which the tool (10, 11) is adjusted into the respective tool positions in accordance with the signals,
**characterized in that** at least one further measuring element (18) is provided downstream of the tool (10, 11) for position detection of the workpiece (1) in the moulder, which at least one measuring element is connected to the machine control and delivers signals describing the feed path of the workpiece (1) to the machine control, and **in that** at least one sensor (26) is provided in the moulder for detecting the beginning of the tool (1), which sensor is connected to the machine control and delivers a signal to the machine control when the workpiece beginning is detected, which signal is used as starting point of the position measurement by means of the measuring element (18).

14. The moulder according to Claim 13,
**characterized in that** the sensor (26) is arranged upstream of the tool (10, 11) and downstream of the measuring element (18) in the feed direction (39) of the workpiece (1).

15. The moulder according to Claim 13 or 14,
**characterized in that** the measuring elements (18) are connected to one another in a cascade-like manner.

16. The moulder according to one of Claims 13 to 15,
**characterized in that** the measuring element (18) is a measuring roller, which preferably bears against the workpiece (1) under pressure, which measuring roller bears against the workpiece (1) during the feed thereof through the moulder and is preferably driven in a rotatable manner by the workpiece (1) during the feed thereof.

17. The moulder according to one of Claims 13 to 16, **characterized in that** the measuring element (18) has a rotary encoder (19), the signals of which are delivered to the machine control.

18. The moulder according to one of Claims 13 to 17, **characterized in that** the measuring element (18) is provided on a support (22), which can be adjusted transversely to the feed direction (39) of the workpiece (1), the adjustment of which support is advantageously detected by at least one sensor (24).

## Revendications

1. Procédé de réalisation de structures ou de contours sur une pièce à usiner (1) en bois, en matière plastique et similaires, lors duquel, dans une raboteuse avec au moins un outil (10, 11) entraîné en rotation, on crée le contour (43, 44) sur la pièce à usiner (1) par enlèvement de matière de la pièce à usiner, en fonction des données de la pièce à usiner (1) et de l'outil (10, 11), les positions de l'outil le long de la pièce à usiner (1) étant fixées pour créer le contour (43, 44) et les données étant transmises à un système de commande de la machine, qui exécute le programme CNC basé sur les données pendant le passage de la pièce à usiner (1) à travers la raboteuse et qui déplace l'outil (10, 11) dans les positions requises via des entraînements de la CNC en fonction de la position de la pièce à usiner, la position de l'outil pendant le passage de la pièce à usiner (1) étant détectée par la raboteuse en ce que pour la détection de la position de la pièce à usiner (1) dans la raboteuse (10, 11), au moins un élément de mesure (18) qui est raccordé au système de commande de la machine est mis à contribution et fournit au système de commande de la machine des signaux décrivant la course d'avance de la pièce à usiner (1), **caractérisé en ce que** le début de la pièce à usiner (1) est détecté par au moins un capteur (26), qui lors de la détection du début de la pièce à usiner fournit au système de commande de la machine un signal qui sert de point de départ de la mesure de la position au moyen de l'élément de mesure (18).

2. Procédé selon la revendication 1,
caractérisé en ce l'élément de mesure (18) est placé à l'avant de l'outil (10, 11).

3. Procédé selon la revendication 1 ou 2,
**caractérisé en ce que** pour la détection de la position de la pièce à usiner dans la raboteuse, on utilise après l'outil (10, 11) au moins un élément de mesure (18) supplémentaire.

4. Procédé selon l'une quelconque des revendications 1 à 3,
**caractérisé en ce que** dans la direction d'avance (39) de la pièce à usiner (1), le capteur (26) est placé à l'avant de l'outil (10, 11) et après l'élément de mesure (18).

5. Procédé selon l'une quelconque des revendications 1 à 4,
**caractérisé en ce que** les données de l'outil (7, 8, 10, 11, 30, 31) indiquent le contour de l'outil.

6. Procédé selon l'une quelconque des revendications 1 à 5,
**caractérisé en ce que** la position d'outil de l'outil (7, 8, 10, 11, 30, 31) est déterminée dans des étapes fixées le long de la pièce à usiner (1) et mémorisée, de préférence sous la forme d'un tableau, par ex. d'un tableau des voies.

7. Procédé selon l'une quelconque des revendications 1 à 6,
**caractérisé en ce que** les positions d'outil de l'outil (7, 8, 10, 11, 30, 31) sont déterminées en direction axiale et/ou radiale.

8. Procédé selon l'une quelconque des revendications 1 à 7,
**caractérisé en ce que** la position angulaire de l'outil (7, 8, 10, 11, 30, 31) par rapport à la direction d'avance (39) et à la surface à usiner de la pièce à d'avance (39) et à la surface à usiner de la pièce à usiner (1) est déterminée et mémorisée.

9. Procédé selon l'une quelconque des revendications 1 à 8,
**caractérisé en ce que** l'outil (7, 8, 10, 11, 30, 31) est déplacé via des entraînements de la CNC, en fonction de la position de la pièce à usiner dans les positions axiales et/ou radiales requises pendant le passage de la pièce à usiner (1) à travers la raboteuse.

10. Procédé selon l'une quelconque des revendications 1 à 9,
**caractérisé en ce qu'**en fonction de la position de la pièce à usiner (1) par rapport à la broche d'usinage des outils (7, 8, 10, 11, 30, 31) et aux éléments de mesure (18), chaque fois l'élément de mesure (18) optimum adapté est mis à contribution en tant qu'élément de mesure actif, sachant qu'avantageusement, des valeurs mesurées de l'élément de mesure (18) actif sélectionné sont mises à contribution en tant que grandeurs de guidage pour les déplacements respectifs des axes de l'outil.

11. Procédé selon l'une quelconque des revendications 1 à 10,
**caractérisé en ce que** les données de la pièce à usiner (1) et de l'outil (7, 8, 10, 11, 30, 31) sont détectées et mémorisées en commun avec les données de position d'outil, le long de la pièce à usiner (1), **en ce que** dans un procédé de simulation, avec les données mémorisées, la création de la structure (27 à 29) ou du contour (43, 44) est réalisée, et **en ce qu'**après la simulation réussie, les données mémorisées sont transmises au système de commande de la machine.

12. Procédé selon l'une quelconque des revendications 1 à 11,
**caractérisé en ce que** les éléments de mesure (18) se transmettent mutuellement leur valeurs mesurées en cascade.

13. Raboteuse, notamment pour la réalisation du procédé selon l'une quelconque des revendications 1 à 12,
avec au moins une bande de transport pour les pièces à usiner (1) le long de la quelle les pièces à usiner (1) sont transportées à travers la raboteuse pour l'usinage, avec des outils (10, 11), entraînés en rotation, dont au moins un outil est prévu pour créer une structure (27 à 29) ou un contour (43, 44) sur la pièce à usiner (1), sachant que pour détecter la position de l'outil dans la raboteuse le long de la bande de transport pour les pièces à usiner (1), il est prévu à l'avant de l'outil (10, 11) au moins un élément de mesure (18) qui est raccordé sur le système de commande de la machine et qui fournit des signaux décrivant la course d'avance de la pièce à usiner (1), au système de commande de la machine avec lequel, en fonction des signaux, l'outil (10, 11) est déplacé dans les positions respectives de l'outil,
**caractérisée en ce que** pour la détection de la position de la pièce à usiner dans la raboteuse, il est prévu après l'outil (10, 11) au moins un élément de mesure (18) supplémentaire qui est raccordé au système de commande de la machine et qui fournit au système de commande de la machine des signaux décrivant la course d'avance de la pièce à usiner (1), et **en ce que** pour détecter le début de la pièce à usiner (1), il est prévu dans la raboteuse au moins un capteur (26) qui est raccordé sur le système de commande de la machine et qui lors de la détection du début de la pièce à usiner, fournit au système de commande de la machine un signal qui sert de point de départ pour la mesure de la position au moyen de l'élément de mesure (18).

14. Raboteuse selon la revendication 13,
**caractérisée en ce que** dans la direction d'avance (39) de la pièce à usiner (1), le capteur (26) est placé à l'avant de l'outil (10, 11) et après l'élément de mesure.

15. Raboteuse selon la revendication 13 ou 14,
**caractérisée en ce que** les éléments de mesure (18} sont reliés les uns aux autres en cascade.

16. Raboteuse selon l'une quelconque des revendications 13 à 15,
**caractérisée en ce que** l'élément de mesure (18) est un galet de mesure, de préférence adjacent sous pression à la pièce à usiner (1), qui lors de l'avance de celle-ci à travers la raboteuse, est adjacent à la pièce à usiner (1} et qui est de préférence entraîné en rotation par la pièce à usiner (1) lors de l'avance de cette dernière.

17. Raboteuse selon l'une quelconque des revendications 13 à 16,
**caractérisée en ce que** l'élément de mesure (18) comporte un codeur (19) dont les signaux sont livrés au système de commande de la machine.

18. Raboteuse selon l'une quelconque des revendications 13 à 17,
**caractérisée en ce que** l'élément de mesure (18) est prévu sur un support (22) ajustable à la transversale de la direction d'avance (39) de la pièce à usiner (1), dont l'ajustage est avantageusement détecté par au moins un capteur (24).
